# EUROPÄISCHE PATENTSCHRIFT

(11) **EP 1 542 478 B1**
(45) Veröffentlichungstag und Bekanntmachung des Hinweises auf die Patenterteilung: **31.01.2007**
(21) Anmeldenummer: 03027025.0
(22) Anmeldetag: 24.11.2003
(51) Int. Cl.: H04Q 3/00

(54) **Verfahren zum Verbindungsaufbau in einem digitalen Nachrichtennetz**
Method for call setup in a digital communication network
Méthode pour établir une connexion dans un réseau de communication numérique

(43) Veröffentlichungstag der Anmeldung: 15.06.2005
(73) Patentinhaber: SIEMENS AKTIENGESELLSCHAFT, 80333 München (DE)
(72) Erfinder: Ostrcil, Richard, Dr., 1100 Wien (AT); Papadimitriou, Dimitris, Dr., 11254 Athen (GR); Wolan, Matthias, 04207 Leipzig (DE)
(74) Vertreter: Berg, Peter

(56) Entgegenhaltungen:
- EP-A- 0 550 179
- US-A- 6 047 055

## Beschreibung

Verfahren zum Verbindungsaufbau in einem digitalen Nachrichtennetz

Die Erfindung betrifft ein Verfahren zum Verbindungsaufbau in einem digitalen Nachrichtennetz, bei dem Signalisierungsinformationen in Form eines vorgegebenen begrenzten Satzes an Nachrichtentypen über einen separaten Kanal ausgetauscht werden.

Bei digitalen Nachrichtennetzen nach den ISDN (Integrated Services Digital Network) - Spezifikationen (ITU-T,ETSI) erfolgt der Austausch von Signalisierungsinformationen zwischen den Endeinrichtungen und der Teilnehmervermittlungsstelle über den D-Kanal nach dem D-Kanal-Protokoll durch standardisierte Nachrichten (Messages). Die Nachrichten und deren Austausch sind in der ITU-T Empfehlung Q.931 festgelegt .

Jede Nachricht besteht aus einem Nachrichtenkopf und zusätzlichen Elementen. Der Nachrichtenkopf umfasst einen Protokolldiskriminator zur Kennzeichnung aller Nachrichten eines bestimmten Protokolls, der "Call Reference", die alle Nachrichten einer Signalisierungsaktivität zuordnet, und den "Message Type", ein Element, welches die Art der Nachricht (SETUP, CONNECT etc.) bezeichnet.

Dem Nachrichtenkopf können Informationselemente folgen, mittels denen unter anderem Dienstmerkmale (Supplementary Services) aktiviert werden können. Die Dienstmerkmale ergänzen die reinen Übermittlungsdienste und gestalten deren Umgang für den Benutzer komfortabler. Sie können relativ einfache Funktionen wie beispielsweise die Übermittlung der Rufnummer der Partnerendeinrichtung oder aufwändigere Funktionen wie "Rückruf bei Besetzt" bereitstellen. Die zu Aufruf und Steuerung der Dienstmerkmale erforderlichen Signalisierungsprozeduren sind in der ITU-T-Empfehlung Q.932 beschrieben.

Damit werden untern anderem folgende Dienstmerkmale realisiert:
- Rufnummernanzeige
- Halten
- Konferenz
- Gebührenanzeige

Ein Beispiel ist aus dem Dokument US 6,047,055 bekannt.

Der Erfindung liegt nun die Aufgabe zugrunde, ein Verfahren für ein neues Dienstmerkmal anzugeben, mittels dem während einer bestehenden Verbindung eine automatisierte Anrufweiterleitung erfolgen kann.

Diese Aufgabe wird erfindungsgemäß gelöst mit einem Verfahren der eingangs genannten Art bei dem in eine Nachricht zum Abbau einer bestehenden Verbindung zwischen einem ersten Teilnehmer und einem zweiten Teilnehmer eine Anforderung zum Aufbau einer Verbindung zwischen dem ersten Teilnehmer und einem dritten Teilnehmer eingefügt wird.

Bei herkömmlichen digitalen Netzen ist eine Anrufweiterleitung lediglich während des Verbindungaufbaues möglich, also beispielsweise dann, wenn ein Teilnehmer innerhalb einer vorgegebenen Zeitspanne nicht abhebt. Erfindungsgemäß wird nun die Möglichkeit eröffnet, die Anrufweiterleitung auch nach einer Ansage einem automatisierten Dialog oder nach einem Gespräch mit einem Teilnehmer in einer Nebenstellenanlage durchzuführen.

Das Verfahren ist besonders vorteilhaft für digitale Nachrichtennetze nach den ISDN-Spezifikationen einsetzbar.

Vorteilhaft ist es weiterhin, wenn die Anforderung zum Weiterleiten der Verbindung in das FACILITY Element einer DISCONNECT Nachricht eingefügt ist. Die Disconnect- Nachricht dient nach dem Stand der Technik lediglich dem Abbau von Verbindungen. Mit dem Nachrichtenelement FACILITY werden für bereits bestehende Verbindungen Dienstmerkmale angefordert.

Erfindungsgemäß wird nun das FACILITY Element in der DISCONNECT Nachricht entgegen den bestehenden Spezifikationen dazu verwendet, ein Rerouting einer Verbindung anzufordern. Damit wird eine einfache Möglichkeit des Weiterleitens geschaffen. Voraussetzung dafür ist, dass im Endgerät des zweiten Teilnehmers Kenntnisse über Leistungsmerkmale und deren Aufruf und Steuerung vorhanden sind. Dies ist bei "intelligenten Endgeräten" oder Nebenstellenanlagen der Fall.

Die Erfindung wird anhand zweier Figuren näher erläutert.

Es zeigen:
Figur 1 den beispielhaften Protokollablauf zwischen Teilnehmer und Vermittlungsstelle bei einer erfindungsgemäßen Anrufweiterleitung und
Figur 2 den vollständigen Protokollablauf zwischen allen beteiligten Teilnehmern und Vermittlungsstellen dazu.

Gemäß ISDN-Spezifikation erfolgt der Austausch von Signalisierungsinformationen zwischen den Endeinrichtungen TNR1, TNR2, TNR3 und der Vermittlungsstelle VST über den D-Kanal nach dem D-Kanal-Protokoll durch die standardisierten Nachrichten der Schicht 3 nach dem OSI-Referenzmodell.

Mit der Nachricht SETUP wird von der Vermittlungsstelle VST an einen zweiten Teilnehmer TNR2 signalisiert, dass ein ankommender Ruf eines ersten Teilnehmers TNR1 vorliegt. Dabei werden alle Informationen mitgegeben, die das Netz für Endgeräteauswahl, Kompatibilitätsprüfung etc. liefern kann.

Der zweite Teilnehmer TNR 2 antwortet mit der Nachricht ALERTING und signalisiert damit, dass die Endeinrichtung grundsätzlich zur Annahme des Rufs in der Lage ist und der Teilnehmer gerufen wird.

Mit der Nachricht CONNECT teilt der zweite Teilnehmer TNR 2 der Vermittlungsstelle dann mit, dass der Ruf angenommen wurde, beispielsweise dadurch, dass der Teilnehmer das Telefon abgehoben hat.

Mit CONNECT ACK bestätigt daraufhin die Vermittlungsstelle VST den Verbindungsaufbau, der B-Kanal (Nutzkanal) wird durchgeschaltet.

Jetzt befindet sich die Verbindung in der Gesprächsphase. Die Vermittlungsstelle VST befindet sich gemäß der Festlegung im D-Kanalprotokoll im Aktiv-Zustand.

Erfindungsgemäß soll nun das Gespräch auf einen dritten Teilnehmer TNR3 umgeleitet werden. Dies kann beispielsweise dann zweckmäßig sein, wenn es sich beim angerufenen zweiten Teilnehmer TNNR2 um eine automatische Tonbandansage handelt, und nach der erfolgten Ansage das Gespräch weitergeleitet werden soll. Weiterhin kann die Weiterleitung auch aufgrund eines Dialoges erfolgen, mit dem beispielsweise nach Art einer Auskunftsstelle der gewünschte Teilnehmer ermittelt und an diesen danach weitergeleitet wird.

Erfindungsgemäß wird für die Auslösung dieser Weiterleitung die bekannte Nachricht DISCONNECT in der Weise ausgebildet, dass im Informationselement FACILITY der Nachricht das Dienstmerkmal "Partial Rerouteing" angefordert wird. Voraussetzung dafür ist, dass im Endgerät Kenntnisse über Leistungsmerkmale und deren Aufruf und Steuerung vorhanden sind. Dies ist bei "intelligenten Endgeräten" oder Nebenstellenanlagen der Fall.

Der zweite Teilnehmer TNR2 sendet nun DISCONNECT mit der Aufforderung, den Anruf umzuleiten und unter Angabe der neuen Zielrufnummer an die Vermittlungsstelle. Diese reagiert darauf mit RELEASE und leitet die Freigabe des B-Kanals und der Call Reference ein, der zweite Teilnehmer quittiert die Meldung mit RELEASE COMPLETE.

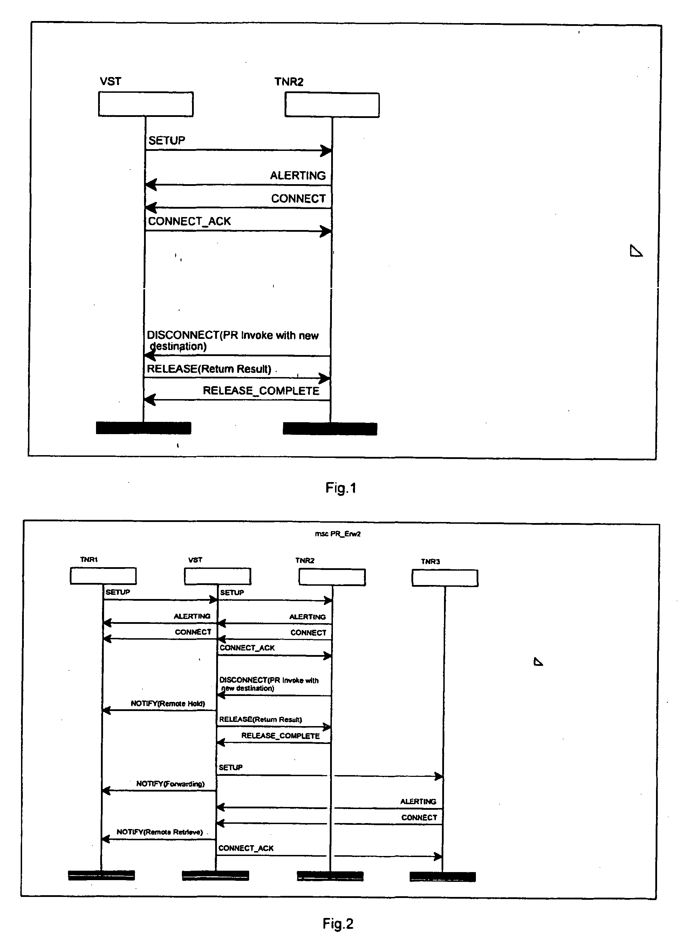

Wie in Fig. 2 dargestellt, wird von der Vermittlungsstelle VST nun in an sich bekannter Weise dem ersten Teilnehmer TNR1 der weitere Verbindungsablauf mittels der Nachricht NOTIFY mitgeteilt und die Verbindung zwischen erstem Teilnehmer TNR1 und drittem Teilnehmer TNR3 mittels SETUP, ALERTING, CONNECT und CONNECT ACKNOWLEDGE aufgebaut.

## Patentansprüche

1. Verfahren zum Verbindungsaufbau in einem digitalen Nachrichtennetz, bei dem Signalisierungsinformationen in Form eines vorgegebenen begrenzten Satzes an Nachrichtentypen über einen separaten Kanal ausgetauscht werden, **dadurch gekennzeichnet, dass** in eine Nachricht (DISCONNECT)zum Abbau einer bestehenden Verbindung zwischen einem ersten Teilnehmer (TNR1) und einem zweiten Teilnehmer (TNR2) eine Anforderung zum Aufbau einer Verbindung zwischen dem ersten Teilnehmer (TNR1) und einem dritten Teilnehmer (TNR3) eingefügt wird.

2. Verfahren nach Anspruch 1, **dadurch gekennzeichnet, dass** das digitale Nachrichtennetz nach den ISDN-Spezifikationen aufgebaut ist.

3. Verfahren nach Anspruch 2, **dadurch gekennzeichnet, dass** die Anforderung zum Weiterleiten der Verbindung in das FACILITY Element einer DISCONNECT Nachricht eingefügt ist.

4. Verfahren nach Anspruch 2, **dadurch gekennzeichnet, dass** als Endgerät des zweiten Teilnehmers (TNR2) eine Telephonnebenstellenanlage vorgesehen ist.

## Claims

1. Method for connection setup in a digital telecommunications network, in which signaling information in the form of a predetermined restricted set of message types is exchanged over a separate channel. **characterized in that** a request to establish a connection between the first subscriber (SUB1) and the third subscriber (SUB3) is inserted into a message (DISCONNECT) for clearing down an existing connection between a first subscriber (SUB1) and a second subscriber (SUB2).

2. Method according to claim 1, **characterized in that** the digital telecommunications network is set up in accordance with the ISDN Specifications.

3. Method according to claim 2, **characterized in that** the request to reroute the connection is inserted into the FACILITY element of a DISCONNECT message.

4. Method according to claim 2, **characterized in that** a private branch exchange is provided as the terminal of the second subscriber (SUB2).

## Revendications

1. Procédé pour établir une connexion dans un réseau de communication numérique, dans lequel des informations de signalisation sont échangées sous la forme d'un bloc limité prédéfini de types de messages par l'intermédiaire d'un canal séparé, **caractérisé en ce que** dans un message (DISCONNECT) pour couper une communicationexistante entre un premier abonné (TNR 1) et un deuxième abonné TNR 2), on insère une demande pour établir une communication entre le premier abonné (TNR 1) et un troisième abonné (TNR 3).

2. Procédé selon la revendication 1, **caractérisé en ce que** le réseau de communication numérique est construit selon les spécifications RNIS.

3. Procédé selon la revendication 2, **caractérisé en ce que** la demande de transfert de communication est insérée dans l'élément FACILITY d'un message DISCONNECT.

4. Procédé selon la revendication 2, **caractérisé en ce qu'**on a prévu une installation téléphonique privée en tant que terminal du deuxième abonné (TNR 2).
